# EUROPEAN PATENT SPECIFICATION

(11) **EP 3 333 534 B1**
(45) Date of publication and mention of the grant of the patent: **20.10.2021**
(21) Application number: 17185752.7
(22) Date of filing: 10.08.2017
(51) Int. Cl.: G01B 11/24

(54) **MEASURING STATION FOR THE DIAGNOSTICS OF LONGITUDINAL BEAMS**
MESSSTATION ZUR UNTERSUCHUNG VON LÄNGSBALKEN
STATION DE MESURE POUR L'ANALYSE DE POUTRES LONGITUDINALES

(30) Priority: 09.12.2016 CZ 20160784
(43) Date of publication of application: 13.06.2018
(73) Proprietor: VÚTS, a.s., Liberec XI - Ruzodol I 460 01 Liberec (CZ)
(72) Inventor: Fabera, Jaroslav, 460 14 Liberec XIV - Ruprechtice (CZ); Sulcova, Veronika, 468 01 Jablonec nad Nisou - Kokonin (CZ); Holat, Evzen, 460 01 Liberec I - Stare Mesto (CZ); Brandt, Jan, 460 01 Liberec (CZ)
(74) Representative: Musil, Dobroslav

(56) References cited:
- US-A- 4 979 815
- US-A- 6 157 450
- US-A1- 2012 041 344
- US-A1- 2016 231 103
- DATABASE WPI Week 201429 8 May 2014 (2014-05-08) Thomson Scientific, London, GB; AN 2014-H45137 XP002777394, & CN 103 625 905 A (SUZHOU KUNTUO THERMAL CONTROL SYSTEM CO) 12 March 2014 (2014-03-12)

## Description

### Technical field

A device for the diagnostics of the geometry of longitudinal beams by means of a laser profilometer.

### Background art

It is essential for modern manufacturing processes to meet the requirements for the accuracy of surface geometry and their critical tolerances. In the production of longitudinal beams, such as roof racks, it is necessary to ensure that they are precisely cut and bent to prevent undesired forces acting between the roof rack and the roof of the car, which could impair their functionality or cause damage.

Several methods are currently used to measure longitudinal beams, the most common of which is a contact method when a diamond stylus of a sensor is in contact with the surface being diagnosed. Although the pressure force acting on the stylus is not large, the measured part of soft or adhesive surfaces may be damaged or deformed. Another shortcoming is the radius of the diamond stylus tip, since the stylus records only the contact points between the tip and the measured surface and for this reason it is not capable of measuring irregularities smaller than the diameter of the sensing stylus.

Also, hand-held portable profilometers are used to accurately measure the surface geometry of longitudinal beams. The drawback is long measurement time, since only partial operations are required. Due to this measurement process and subsequent evaluation of the surface geometry the resulting processing time is extended to several tens of minutes.

US 2016/0231103 A1 discloses a measuring diagnostic station of the geometry of longitudinal beams comprising a test chamber. In the test chamber is arranged a clamping plate, on which are mounted clamping beds for fixing the measured object, which are coupled to adjusting means. On the clamping plate are also mounted restrictor plates for defining a space for placing the measured object, which are coupled to a restrictor plate drive. Above the clamping plate is arranged a laser profilometer which is used for scanning the shape of the measured object.

A device which performs automatic non-contact scanning of an object is disclosed in US6157450. The product to be tested is attached to a chuck which moves in three sliding and two rotating axes. The chuck may shift and rotate the object to be tested in all directions, whereby scanning the surface geometry is carried out by a laser profilometer mounted fixedly above it. The disadvantage of this device is the limited maximum possible displacement of the chuck, which limits the largest possible size of the scanned object. Since the laser profilometer is mounted fixedly, this device is not suitable for the diagnostics of longitudinal objects, such as roof racks.

The goal of the invention is to provide a semi-automatic device for the diagnostics of the surface geometry of longitudinal beams, which carries out scanning and compares the measured longitudinal beam to a computer model within a few minutes.

### Principle of the invention

The present invention relates to a measuring station for the diagnostics of the surface geometry of longitudinal beams according to claim 1, whose principle is a test chamber comprising a clamping plate, on which are mounted clamping beds for fixing a longitudinal beam, coupled to adjusting means, and restrictor plates for defining a space for placing the longitudinal beam, which are coupled to restrictor plate drive, whereby a laser profilometer is arranged reversibly adjustably above the clamping plate in a direction parallel to a line interlaid by the clamping beds in the basic position, whereby the laser profilometer serves to scan the shape of the side/sides of the longitudinal beam facing the profilometer.

The test chamber, mounted in a metal frame, is defined at the bottom by the clamping plate and on sides and at the top by a material which does not transmit the wavelength of the light emitted by the laser of the profilometer. In a preferred embodiment, at least the front side is made of a transparent material.

On the clamping plate, symmetrically from its center in the longitudinal direction, are mounted clamping beds with adjusting means, such as pneumatic cylinders, which serve to fix the diagnosed longitudinal beam. The adjusting means control the movement of the clamping beds and the clamping means with a snubber provided thereon for fixing the inserted longitudinal beams, whereby insertion of the longitudinal beam in the clamping bed is controlled by an optical barrier, which is mounted in at least one of the clamping beds.

Located symmetrically with respect to the center of the clamping plate at its edges in the longitudinal direction are folding plates, which define the space of the longitudinal beam in the test chamber and which are controlled with the aid of the restrictor plate drive, for example, pneumatic cylinders.

The drive of the adjusting and restrictor plate drive may be purely based on linear movement or conversion of a rotary movement into linear, such as mechanical, pneumatic, hydraulic or electromechanical movement.

Situated inside the test chamber is a CCD camera serving as a bar code reader for unambiguous identification of the final product, the record of which is subsequently archived.

In the upper part of the test chamber, a linear slider controlled by a motor for precise positioning and positioning is located above the clamping plate parallel to the line interlaid by the clamping beds in the basic position, with a laser profilometer used for scanning the longitudinal beam to be diagnosed.

The front side of the test chamber is provided with a vertical sliding door, which allows access to the inner area of the test chamber. Both sides of this sliding door have a lifting mechanism which controls this door and whose operation is controlled by another safety optical barrier, the drive of the lifting mechanism being linear, as is the case with the adjusting and restrictor plate drive.

A Leap Motion contactless controller is disposed on the frame of the structure in front of the test chamber. The leap motion controller, which responds to hand movements and gestures, is used to choose the type of the longitudinal beam.

The movement of the clamping beds, the folding plates and the linear drive with the laser profilometer is controlled by means of a programmable computer. The diagnostics of the longitudinal beam and its evaluation is carried out by automated software. After selecting the diagnostics program, the clamping beds and the folding plates are put to a position suitable for inserting the selected type of the longitudinal beam and the whole object is scanned. A 3D image is created from several scanned profiles and compared to a stereolithographic model prepared using CAD (computer-assisted design). By optimizing the software for a specific product, the scanning speed of one longitudinal beam is performed within approximately two minutes. The deviations between the diagnosed longitudinal beam and the computer model are shown on the monitors located on the top of the frame.

### Description of the drawings

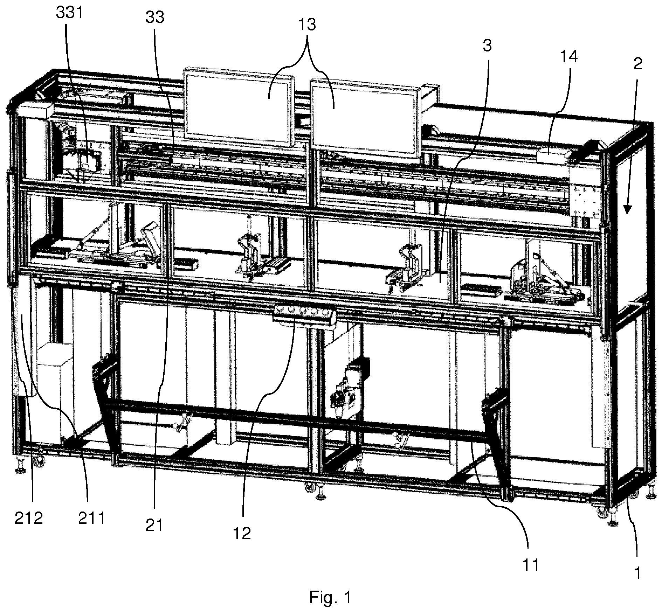

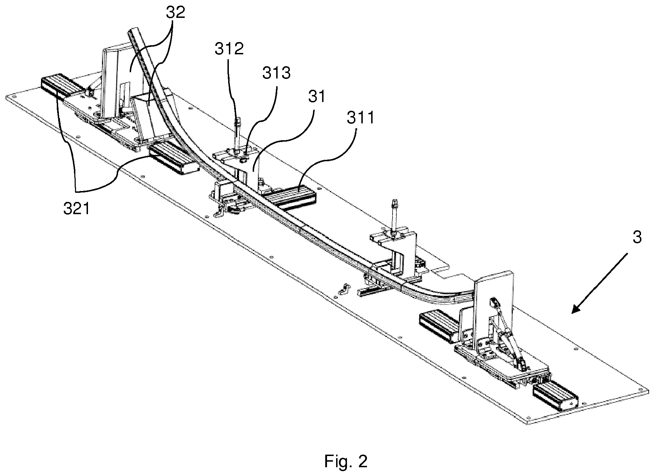

An exemplary embodiment of the invention is schematically represented in the accompanying drawings, wherein Fig. 1 shows an axonometric view of the device with the individual positions and Fig. 2 shows a clamping plate with the positions.

### Examples of embodiment

The measuring station for the diagnostics of the surface geometry of longitudinal beams will be described with reference to the schematic representation shown in Fig. 1 and Fig. 2.

The measuring station comprises a test chamber **2,** which is mounted in a frame **1** and which is defined from the bottom by a clamping plate **3** and from the sides and the top by a material impermeable to the wavelength of the laser being used. In the illustrated embodiment, the semi-permeable material is smoked tinted plexiglass, all its sides being transparent.

Two clamping beds **31** for inserting the longitudinal beams are arranged on the clamping plate **3** in the longitudinal direction, symmetrically from its center. The clamping beds **31** are coupled to adjusting means **311** for changing the position of the clamping beds **31** depending on the type of longitudinal beam to be tested. In the illustrated embodiment, pneumatic cylinders are used as adjusting means **311.** Fixing the longitudinal beam in the clamping bed **31** is ensured by a clamping means **312** mounted in it, which is provided with a snubber, so that the surface of the longitudinal beam is not damaged. In the illustrated embodiment, the clamping means **312** is a pneumatic cylinder with a rubber snubber. The control of the insertion of the longitudinal beam in the clamping bed **31** is performed by an optical barrier **313,** which is arranged on one of the clamping beds.

Two folding restrictor plates **32** are arranged on each side of the clamping plate **3** in the longitudinal direction symmetrically from the center of the clamping plate **3.** The restrictor plates **32,** which serve to define a space for placing the longitudinal beam in the test chamber **2,** are coupled to restrictor plate drive **321,** in the illustrated embodiment to pneumatic cylinders, used to control the position of the restrictor plates **32** depending on the longitudinal beam type chosen.

In the upper part of the test chamber **2,** a linear slider **33** is attached to the frame **1** of the device above the clamping plate **3,** parallel to the line interlaid by the clamping beds in the basic position. A laser profilometer **331** is mounted in the linear slider. A CCD camera (not shown), which is used as a bar code reader to identify products, is attached to the inner rear wall of the test chamber **2.**

The front side of the test chamber **2** is provided with a vertical sliding door **21,** which allows access to the inner area of the test chamber **2.** Its operation is controlled by pneumatic cylinders **211** of the sliding door and the position of the door **21** is controlled by an optical barrier **212.**

In a preferred embodiment, a movable frame **11** is arranged on the lower end of the frame **1** of the structure, whereby the movable frame **11** is sliding in the horizontal direction to allow access to the electrical distribution switchboard and the industrial computer, which are located at the bottom of the structure. This movable frame **11** is provided with a mechanical gauge for measuring the gap between the longitudinal beam and the car roof. This additional device is used for mechanical inspection of the laser test chamber **2.**

A Leap motion contactless controller **12** serving to select the type of longitudinal beam is attached to the central portion of the frame **1** of the structure above the movable frame **11.** Two monitors **13** are located on the upper part of the frame **1** of the structure, one being used for monitoring the overall production and the other for selecting a program and subsequently for displaying the results of the diagnosis of the selected program. The whole structure is illuminated by LED lights **14.**

After the machine is switched on, it is put into the start-up mode, when the sliding door **21** opens, the clamping beds **31** and the restrictor plates **32** move to the basic position and the operator is asked to select a program. After selecting the desired longitudinal beam type using the Leap Motion contactless controller **12,** the sliding door **21** is closed, the clamping beds **31** and the restrictor plates **32** are moved to the position for the selected product. The clamping beds **31** move forward towards the operator for inserting the left longitudinal beam or backwards for inserting the right longitudinal beam. The restrictor plates **32** move towards each other, towards the center of the clamping plate **2,** for a shorter type of the longitudinal beam or away from the center for a longer longitudinal beam. Subsequently, the sliding door **21** opens for inserting the longitudinal beam, whereby the fixing of the longitudinal beam to the clamping end **31** is controlled by the optical barrier **313** and manually confirmed by the machine operator. After that the test chamber **2** is closed again, the longitudinal beam is clamped by means of the clamping means **312** with a snubber and subsequently the surface of the longitudinal beam is scanned by the laser profilometer **331,** which is mounted in a motor-driven linear slider **33** for its precise positioning. The laser profilometer **331** is coupled to the means for creating a polygonal network from a plurality of points formed by scanning the longitudinal beam. The means for creating the polygonal network are coupled to one monitor **13** for displaying the polygonal network, whereby a second monitor **13,** which is coupled to means in which are stored computer-generated stereolithographic models of the longitudinal beams, is used for displaying a respective model of the longitudinal beam.

The laser profilometer **331** scans multiple points from which a polygonal network is formed, made up of individual representing areas. These areas are compared to the area which was obtained from a stereolithographic model prepared by using CAD (computer-assisted design), the result of the comparison being the measured deviations between the longitudinal beam to be measured and the model. Displayed on the monitors **13** are models created from a plurality of points scanned by the laser profilometer **331,** stereolithographic models created by computer modelling and their mutual deviations. The whole process of scanning and evaluation of the surface geometry of a longitudinal beam having a length of 1800 mm and a width of 40 mm takes approximately 120 seconds.

In the case of a good result, the sliding door **21** opens and the longitudinal beam is released from the clamping bed **31.** Otherwise, the system waits before the longitudinal beam is released to confirm that it is a faulty product - the so-called NOK product (not okay). Subsequently, it is possible to test the longitudinal beam with the same parameters or to make a new product selection and test another type of longitudinal beam.

### Industrial applicability

The measuring station can be used for the diagnostics of the surface geometry of longitudinal beams, such as roof racks. During product processing, the diagnostic results can be used to adjust the setting of the production parameters of the preceding machining station. In the final inspection of the finished peace provided with a unique bar code, the measured data can be archived for later inspection and control of the surface geometry of the longitudinal beam during its life cycle.

### List of references

- 1: Frame of the device
- 11: Movable frame
- 12: Leap motion contactless controller
- 13: Monitor
- 14: LED lights
- 2: Test chamber
- 21: Sliding door
- 211: Pneumatic cylinder of the sliding door
- 212: Optical barrier of the sliding door
- 3: Clamping plate
- 31: Clamping bed
- 311: Adjusting means
- 312: Clamping means with a snubber
- 313: Optical barrier of the bed
- 32: Restrictor plate
- 321: Restrictor plate drive
- 33: Linear slider
- 331: Laser profilometer

## Claims

1. A measuring station for diagnostics of the geometry of longitudinal beams comprising a test chamber (2), a clamping plate (3) arranged in the test chamber, clamping beds (31) mounted on the clamping plate (3) for fixing a longitudinal beam, adjusting means (311) coupled to the clamping beds (31) and restrictor plates (32) mounted on the clamping plate (3) for defining a space for placing a longitudinal beam, **characterized in that** the restrictor plates (32) are coupled to a restrictor plate drive (321), wherein the measuring station further comprises a laser profilometer (331) arranged reversibly adjustably in the direction parallel to the longitudinal axis of and above the clamping plate (3), which is used for scanning the shape of the side/sides of the longitudinal beam facing the laser profilometer (331), wherein the laser profilometer (331) is coupled to means for comparing the scanned longitudinal beam with a computer modeled longitudinal beam.

2. The measuring station according to claim 1, **characterized in that** the adjusting means (311) are formed by a linear drive.

3. The measuring station according to claim 1, **characterized in that** the restrictor plate drive (321) is formed by a linear drive.

4. The measuring station according to claim 2 or 3, **characterized in that** the linear drive is composed of a pneumatic cylinder.

5. The measuring station according to claim 1 or 2, **characterized in that** the clamping bed (31) is provided with a clamping means (312) with a snubber to fix the longitudinal beam in the clamping bed (31).

6. The measuring station according to any of the preceding claims, **characterized in that** at least one clamping bed (31) is provided with an optical barrier (313) for controlling the insertion of the longitudinal beam to the clamping bed (31).

7. The measuring station according to any of the preceding claims, **characterized in that** the test chamber (2) is provided with a cover impermeable to the wavelength of the laser of the profilometer (331).

8. The measuring station according to claim 7, **characterized in that** at least the front side of the cover of the test chamber (2) is made of a transparent material.

9. The measuring station according to any of the preceding claims, **characterized in that** the laser profilometer (331) is coupled to means for creating a polygonal network from a plurality of points formed by scanning the longitudinal beam by the laser profilometer (331).

10. The measuring station according to claim 9, **characterized in that** the means for creating the polygonal network are coupled to one monitor (13) for displaying the polygonal network, whereby a second monitor (13), which is coupled to means in which computer-generated stereolithographic models of the longitudinal beams are stored, is used for displaying the respective model of the longitudinal beam.

## Patentansprüche

1. Messstation zur Diagnostik von Geometrie von Längsträgern, die Testkammer (2), Aufnahmeplatte (3), die in der Testkammer (2) angeordnet ist, auf der Aufnahmeplatte (3) gelagerte Aufnahmebetten (31) zur Lagerung eines Längsträgers, Verstellmittel (311), die mit dem Aufnahmebett (31) verkoppelt sind, und Abgrenzungsplatten (32) aufweist, die auf der Aufnahmeplatte (3) zur Abgrenzung des Raumes zur Lagerung des Längsträgers gelagert sind, **dadurch gekennzeichnet, dass** die Abgrenzungsplatten (32) mit dem Antrieb der Abgrenzungsplatte (321) verkoppelt sind, wobei die Messstation weiter ein Laserprofilometer (331) aufweist, das oberhalb der Aufnahmeplatte (3) in der mit der Längsachse der Aufnahmeplatte (31) parallel laufenden Richtung umkehrbar verstellbar angeordnet ist, das dem Scannen der Form der Seite/Seiten des Längsträgers dient, die dem Laserprofilometer (331) zugewandt ist/sind, wobei das Laserprofilometer (331) mit den Mitteln zum Vergleich des gescannten Längsträgers mit einem Computermodell des Längsträgers verkoppelt ist.

2. Messstation nach dem Anspruch 1, **dadurch gekennzeichnet, dass** die Verstellmittel (311) durch einen linearen Antrieb gebildet werden.

3. Messstation nach dem Anspruch 1, **dadurch gekennzeichnet, dass** der Antrieb der Abgrenzungsplatte (321) durch einen linearen Antrieb gebildet wird.

4. Messstation nach dem Anspruch 2 oder 3, **dadurch gekennzeichnet, dass** der lineare Antrieb durch einen pneumatischen Zylinder gebildet wird.

5. Messstation nach dem Anspruch 1 oder 2, **dadurch gekennzeichnet, dass** das Aufnahmebett (31) ein Aufnahmemittel (312) mit einem elastischen Anschlag zur Befestigung des Längsträgers im Aufnahmebett (31) aufweist.

6. Messstation nach einem der vorangehenden Ansprüche, **dadurch gekennzeichnet, dass** mindestens ein Aufnahmebett (31) eine optische Schranke (313) zur Prüfung der Einlegung des Längsträgers ins Aufnahmebett (31) aufweist.

7. Messstation nach einem der vorangehenden Ansprüche, **dadurch gekennzeichnet, dass** die Testkammer (2) eine Haube aufweist, die die Laserwellenlängen des Profilometers (331) nicht durchlässt.

8. Messstation nach dem Anspruch 7, **dadurch gekennzeichnet, dass** mindestens die vordere Seite der Haube der Testkammer (2) aus einem transparenten Material ist.

9. Messstation nach einem der vorangehenden Ansprüche, **dadurch gekennzeichnet, dass** das Laserprofilometer (331) mit den Mitteln zur Bildung eines polygonalen Netzes aus einer Vielzahl von Punkten verkoppelt ist, die durch Scannen des Längsträgers durch das Laserprofilometer (331) entstanden sind.

10. Messstation nach dem Anspruch 9, **dadurch gekennzeichnet, dass** die Mittel zur Bildung eines polygonalen Netzes mit einem Monitor (13) zur Abbildung des polygonalen Netzes verkoppelt sind, wobei der andere Monitor (13) mit den Mitteln verkoppelt ist, in denen die computergestützt gebildeten stereolithographischen Modelle von Längsträgern gespeichert sind.

## Revendications

1. Station de mesure pour le diagnostic de la géométrie de longerons comprenant une chambre d'essai (2), une plaque de fixation (3) disposée dans la chambre d'essai (2), des bancs de fixation (31) disposés sur la plaque de fixation (3) qui permettent de maintenir le longeron, des moyens de repositionnement (311) attelés au banc de fixation (31) et des plaques de délimitation (32) disposées sur la plaque de fixation (3) qui permettent de définir l'espace pour le longeron, **caractérisée en ce que** les plaques de délimitation (32) sont attelées à l'entraînement de la plaque de délimitation (321), tandis que la station de mesure comprend ensuite un profilomètre laser (331) disposé de manière réversible et ajustable au-dessus de la plaque de fixation (3) dans le sens parallèle à l'axe longitudinal de la plaque de fixation (3), ce qui permet de scanner la forme du ou des côtés du longeron faisant face au profilomètre laser (331), tandis que le profilomètre laser (331) est attelé aux moyens qui permettent de comparer le longeron scanné avec un modèle informatique du longeron.

2. Station de mesure selon la revendication 1, **caractérisée en ce que** les moyens de repositionnement (311) sont constitués d'un actionneur linéaire.

3. Station de mesure selon la revendication 1, **caractérisée en ce que** l'entraînement de la plaque de délimitation (321) est constitué d'un actionneur linéaire.

4. Station de mesure selon la revendication 2 ou 3, **caractérisée en ce que** l'actionneur linéaire est constitué d'un cylindre pneumatique.

5. Station de mesure selon la revendication 1 ou 2, **caractérisée en ce que** le banc de fixation (31) est pourvu d'un moyen de fixation (312) avec une butée flexible qui permet de fixer le longeron dans le banc de fixation (31).

6. Station de mesure selon l'une des revendications précédentes, **caractérisée en ce qu'**au moins un banc de fixation (31) est muni d'une barrière immatérielle (313) qui permet de contrôler l'insertion du longeron dans le banc de fixation (31).

7. Station de mesure selon l'une des revendications précédentes, **caractérisée en ce que** la chambre d'essai (2) est pourvue d'un couvercle qui ne transmet pas les longueurs d'onde du laser du profilomètre (331).

8. Station de mesure selon la revendication 7, **caractérisée en ce qu'**au moins la face avant du couvercle de la chambre d'essai (2) est faite avec un matériau transparent.

9. Station de mesure selon l'une des revendications précédentes, **caractérisée en ce que** le profilomètre laser (331) est attelé aux moyens qui permettent de former un maillage polygonal à partir d'un nombre de points générés par le passage d'un longeron au scanner à l'aide de profilomètre laser (331).

10. Station de mesure selon la revendication 9, **caractérisée en ce que** les moyens qui permettent de former le maillage polygonal sont attelés à un moniteur (13) qui permet d'afficher le maillage polygonal, tandis que le deuxième moniteur (13) est attelé aux moyens dans lesquels sont stockés les modèles stéréolithographiques de longerons générés par ordinateur.
